# EUROPÄISCHE PATENTSCHRIFT

(11) **EP 2 889 087 B1**
(45) Veröffentlichungstag und Bekanntmachung des Hinweises auf die Patenterteilung: **20.01.2016**
(21) Anmeldenummer: 14190134.8
(22) Anmeldetag: 23.10.2014
(51) Int. Cl.: B02C 18/24, B02C 25/00, H02P 27/06, B02C 18/00, H01J 9/52

(54) **Zerkleinerungsvorrichtung mit einem Drehstrom-Asynchronmotor und einem kraftschlüssigen Zugmittelgetriebe sowie Verfahren zu dessen Betrieb**
Crushing device with a rotary current asynchronous motor and a non-positive belt transmission and method for the operation thereof
Dispositif de broyage doté d'un moteur asynchrone triphasé et d'un mécanisme à élément de traction commandé par gravité et son procédé de fonctionnement

(30) Priorität: 23.12.2013 DE 102013114782
(43) Veröffentlichungstag der Anmeldung: 01.07.2015
(73) Patentinhaber: Vecoplan AG, 56470 Bad Marienberg (DE)
(72) Erfinder: Lipowski, Wolfgang, 56479 Seck (DE)
(74) Vertreter: Lippert, Stachow & Partner

(56) Entgegenhaltungen:
- AT-A1- 511 908
- DE-A1-102008 061 734
- US-A- 2 697 556

## Beschreibung

Die Erfindung betrifft ein Verfahren zum Betrieb einer Zerkleinerungsvorrichtung, bei welchem von einer Antriebseinrichtung, die zumindest einen Drehstrom-Elektromotor umfasst, ein Zerkleinerungsrotor über ein kraftschlüssiges Zugmittelgetriebe, insbesondere ein Riemengetriebe, angetrieben wird, wobei der Drehstrom-Elektromotor von einem gesteuerten Frequenzumrichter gespeist wird zum Betreiben des Zerkleinerungsrotors mit vorgegebener Rotordrehzahl in einer Normalbetriebsphase, und wobei ein Maß für den Zugmittelgetriebe-Schlupf ermittelt und überwacht wird und bei Überschreiten einer ersten Schlupfwertschwelle der Drehstrom-Elektromotor zum Abschalten angesteuert wird. Die Erfindung betrifft ferner eine Zerkleinerungsvorrichtung zur Umsetzung eines solchen Verfahrens.

Derartige Zerkleinerungsvorrichtungen bzw. ein solches Verfahren zu deren Betrieb sind auf dem Gebiet wohl bekannt und für eine Vielzahl von Zerkleinerungsgütern wie Holz, Hausmüll, Industrieabfällen, Produktionsresten etc. einsetzbar. Um die notwendigen Zerkleinerungskräfte aufzubringen, kann der Elektromotor einer solchen Zerkleinerungsvorrichtung einige 10 KW bis zu einigen tausend kW Ausgangsleistung aufweisen. Dabei wird häufig das zu zerkleinernde Gut dem sich drehenden Zerkleinerungsrotor zugeführt, wobei an dem Zerkleinerungsrotor angebrachte Werkzeuge auf das Zerkleinerungsgut einwirken. Je nach Ausführungsform dreht der Zerkleinerungsrotor mit einer Geschwindigkeit von einigen Umdrehungen bis einigen hundert Umdrehungen pro Minute. Da der Zerkleinerungsvorgang bei vielen Zerkleinerungsgütern nicht gleichmäßig erfolgt, sondern stoßbehaftet sein kann, sind hohe Anforderungen an die Stabilität der Vorrichtung und insbesondere die Lagerung der sich drehenden Teile gestellt.

Der Einsatz eines kraftschlüssigen Zugmittelgetriebes stellt sich bei derartigen Anwendungen als vorteilhafte Alternative zu dem auch häufig eingesetzten Zahngetriebeantrieb, bei welchem ein Elektromotor über ein Zahngetriebe mit dem Zerkleinerungsrotor verbunden ist, heraus. Je nach spezifischer Anwendung können mechanische Zahnradgetriebe starke Laufgeräusche erzeugen bzw. zu einer rauen, stoßbehafteten Arbeitsweise der Zerkleinerungsvorrichtung mit allen damit verbundenen Nachteilen wie Lärm, Erschütterungen und starken Belastungen einzelner Maschinenelemente führen. Insbesondere im Blockierfall wie beim Auftreten von unzerkleinerbaren Störstoffen kann es zu erheblichen Schäden am Getriebe und Wellen bis hin zu Brüchen kommen. Vor allem bei derartigen Zerkleinerungsvorgängen hat sich die Verwendung eines kraftschlüssigen Zugmittelgetriebes, insbesondere eines Riemengetriebes als vorteilhaft erwiesen, das zwischen Drehstrom-Elektromotor und Zerkleinerungsrotor angeordnet ist. Ein solches Zugmittelgetriebe ist vergleichsweise unempfindlich gegenüber Stoßbelastung und wirkt dämpfend auf den gesamten elektromechanischen Antrieb. Der ansonsten, insbesondere aufgrund seiner Baugröße und seiner Verschleißeigenschaften nachteilbehaftete Riementrieb bietet bei derartigen Zerkleinerungsvorrichtungen den Vorteil, dass er beim Auftreten von Störstoffen im Zerkleinerungsgut rutscht und damit Antriebsschäden vermeidet. Beispielsweise kann bei diesen Zerkleinerungsvorrichtungen beim Erkennen des Auftretens eines Schlupfes über eine vorgegebene Schlupfwertschwelle hinaus der Elektromotor zum Abschalten angesteuert werden.

Eine gattungsbildende Zerkleinerungsvorrichtung sowie ein Verfahren zu dessen Betrieb ist beispielsweise in der deutschen Offenlegungsschrift DE 10 2008 061 734 A1 angegeben.

Herkömmliche Riemenantriebe für Zerkleinerungsvorrichtungen weisen jedoch einen deutlichen Verschleiß auf, welcher die Notwendigkeit der Einhaltung von vergleichsweise kurzen Wartungsintervallen nach sich zieht. Ferner kann der Betrieb derartiger Zerkleinerungsvorrichtungen je nach Zerkleinerungsgut aufwendig sein, der ein häufiges Stoppen oder Reversieren des Rotors notwendig macht, wenn sich eine Stauung des Zerkleinerungsgutes gebildet hat. Auch das Vermindern der Zuführgeschwindigkeit des Zerkleinerungsgutes kann häufig die Unterbrechung des Zerkleinerungsvorganges nicht verhindern. Insofern liegt der vorliegenden Erfindung die Aufgabe zugrunde, ein herkömmliches Verfahren zum Betrieb derartiger Zerkleinerungsvorrichtungen bzw. eine solche Zerkleinerungsvorrichtung so weiterzubilden, dass zumindest ein Teil der geschilderten Probleme behoben ist.

Überraschenderweise wird diese Aufgabe schon mit einem Verfahren zum Betrieb einer Zerkleinerungsvorrichtung mit den Merkmalen von Anspruch 1 gelöst. Das erfindungsgemäße Verfahren zeichnet sich dadurch aus, dass bei Überschreiten einer vorgegebenen zweiten Schwelle des Zugmittelgetriebe-Schlupfes, die betragsgemäß unterhalb der ersten Schlupfschwelle liegt, zum Weiterbetrieb der Zerkleinerungsvorrichtung der Frequenzumrichter in einer Schlupfbetriebsphase zur Regelung bzw. Steuerung des Zugmittelgetriebe-Schlupfes auf eine vorgegebene dritte Schlupfwertschwelle und zur Absenkung des vom Drehstrom-Elektromotor abgegebenen Drehmoments angesteuert wird.

Dadurch, dass bei dem erfindungsgemäßen Verfahren beim Überschreiten einer zweiten Schwelle für den Zugmittelgetriebe-Schlupf ein Schlupfbetrieb durchgeführt wird, bei welchem entweder durch eine einfache Steuerung oder über eine Regelung eine dritte vorgegebene Schlupfwertschwelle für den Zugmittelgetriebe-Schlupf angesteuert bzw. geregelt wird, kann erreicht werden, dass in Überlast-Betriebsphasen die Belastung auf das Zugmittelgetriebe, insbesondere das Riemengetriebe zur Verringerung des Schlupfes erniedrigt wird, sodass der Verschleiß im Getriebe minimiert wird und gleichzeitig jedoch der Betrieb der Zerkleinerungsvorrichtung unterbrechungsfrei aufrechterhalten werden kann, da der Schlupf im Vergleich zu Verfahren bzw. Vorrichtungen des Standes der Technik schnell wieder "eingefangen"bzw. es verhindert werden kann, dass sich der Schlupf auf einen zu großen Wert erhöht bzw. die Drehzahl des Zerkleinerungsrotors zu sehr erniedrigt.

Zweckmäßigerweise kann der ermittelte Zugmittelgetriebe-Schlupf als zu steuernde Größe bzw. Regelgröße und eine Ausgangsgröße des Frequenzumrichters wie Speisestrom bzw. Speisespannung als Steuer- bzw. Führungsgröße dienen. Durch die verminderte Belastung des Zugmittelgetriebes können Wartungsintervalle erhöht und der Betrieb der Zerkleinerungsvorrichtung mit dem erfindungsgemäßen Verfahren über bislang nicht erreichbare Betriebszeitdauern unterbrechungsfrei aufrechterhalten werden.

Weitere erfindungswesentliche Merkmale sind in der nachfolgenden allgemeinen Beschreibung, der auf die beiliegenden Figuren bezogenen speziellen Beschreibung sowie in den Unteransprüchen angegeben.

Die als Führungsgröße bzw. Steuergröße einsetzbare dritte Schlupfwertschwelle kann beim erfindungsgemäßen Verfahren auf die jeweilige Zerkleinerungsaufgabe spezifisch angepasst werden. Während zweckmäßigerweise das Auftreten eines Zugmittelgetriebe-Schlupfes von mehr als 50%, insbesondere mehr als 60% oder 70% zum Abschalten bzw. Herunterfahren des Elektromotors führt, kann es zweckmäßig sein, die zweite Schlupfschwelle für den Zugmittelgetriebe-Schlupfes etwas oberhalb des bei Verwendung eines Riemenantriebs auch auftretenden Dehnschlupfes von etwa 1% bis 3%, welcher insbesondere von dem spezifischen Aufbau des jeweiligen Riemens und der Riemenspannung abhängt, festzulegen, beispielsweise auf eine Schlupfschwelle im Bereich von etwa 2% bis 6%, insbesondere 3% oder 4%. In einer Ausführungsform kann diese zweite Schlupfschwelle durch Addition von Dehn- und Gleitschlupf festgelegt werden, in einer anderen Ausführungsform kann bei der Festlegung der zweiten Schlupfschwelle in einem Bereich von etwa 2% bis 5% allein auf den Gleitschlupf im Reimengetriebe abgestellt werden.

Durch die beschriebe Maßnahme kann das erfindungsgemäße Verfahren so eingestellt sein, dass grundsätzlich ein geringer Gleitschlupf innerhalb des Riemengetriebes beim Zerkleinerungsbetrieb erlaubt ist, ohne das die Steuerung eingreift, jedoch beim Überschreiten einer vorgegebenen Grenze der aktuelle Betrieb zur Beibehaltung einer vorgegebenen Rotordrehzahl unterbrochen und in einen Schlupfregelbetrieb gewechselt wird, bei welchem eine vorgegebene dritte Schlupfwertschwelle als Führungs- bzw. Steuergröße dient und das Motordrehmoment herabgesetzt sein kann. Zwar kann der aktuelle Zerkleinerungsbetrieb zur Beibehaltung der vorgegebenen Rotordrehzahl unterbrochen werden, der Zerkleinerungsbetrieb als solches muss jedoch nicht zwingend abgebrochen werden, sodass ein unterbrechungsfreier Zerkleinerungsbetrieb aufrechterhalten werden kann.

Um möglichst sicher den Schlupf wieder "einzufangen" und von einem Schlupfregelbetrieb wieder in den vorhergehenden Betrieb mit vorgegebener Drehzahl überzuleiten, kann es zweckmäßig sein, wenn die dritte Schlupfwertschwelle kleiner als die zweite Zugmittelgetriebe-Schlupfwertschwelle ausgewählt ist. Beispielsweise kann vorgesehen sein, dass die dritte Schlupfschwelle etwa auf einen bei üblicher Zerkleinerungsbelastung und bei Einstellung eines vorgegebenen Riemenspannung auftretenden, typischen Dehnschlupf des jeweiligen Riementriebs oder nur geringfügig darüber eingestellt ist, sodass in der Schlupfbetriebsphase zunächst die Führungs- bzw. Steuergröße auf einen Gleitschlupf von etwa oder nahe 0% eingestellt sein kann.

Andererseits kann es zur Minimierung der Zeitdauer des Zeitintervalls der Schlupfbetriebsphase auch zweckmäßig sein, die dritte Schlupfwertschwelle etwa oder genau auf die zweite vorgegebene Schlupfwertschwelle zu legen.

Zweckmäßigerweise kann vorgesehen sein, dass in der Schlupfbetriebsphase das vom Drehstrom-Elektromotor erzeugte Drehmoment mittels Einstellen von Speisestrom bzw. Speisespannung durch den Frequenzumrichter abgesenkt wird zum Erreichen bzw. Unterschreiten der dritten Schlupfwertschwelle. Das Absenken des Motordrehmoments im Zuge der beschriebenen Schlupfbetriebsphase kann vorteilhaft genutzt werden, um den Zugmittelgetriebe-Schlupf wieder "einzufangen", d.h. unterhalb oder auf der vorgegebenen dritten Schlupfschwelle einzustellen, sodass der Elektromotor danach wieder sofort beschleunigt werden kann, bevor der Zerkleinerungsrotor zum Stillstand gekommen ist. In dieser Hinsicht kann bei dem erfindungsgemäßen Verfahren die Steuerung bzw. Regelung den Motor automatisch an die Eigenschaften des Riemengetriebes adaptieren, das zunächst ein vergleichsweise hohes Drehmoment überträgt, dann bei Überlastung plötzlich durchrutscht und in Folge so lange nur ein geringeres Drehmoment überträgt, bis der Schlupf auf eine vorgegebene Schwelle wieder eliminiert ist.

Unter Ausnutzung des erfindungsgemäßen Verfahrens ist eine Zerkleinerungsvorrichtung mit einer Antriebseinrichtung, bei welcher ein über einen Frequenzumrichter gespeister Elektromotor mittels eines kraftschlüssigen Zugmittelgetriebes, insbesondere eines Riemengetriebes einen Zerkleinerungsrotor ansteuert, in fast allen Betriebssituationen ein unterbrechungsfreier Weiterbetrieb möglich, ohne dass die Gefahr eines übermäßigen Verschleißes im Zugmittelgetriebe besteht. Zweckmäßigerweise kann vorgesehen sein, dass in der Normalbetriebsphase, welche sich durch die Beibehaltung einer vorgegebenen Rotordrehzahl auszeichnet, durch den Frequenzumrichter mittels Einstellen von Speisestrom bzw. Speisespannung des Drehstrom-Elektromotors eine Anpassung des vom Drehstrom-Elektromotor erzeugten Drehmoments an die aktuelle Zerkleinerungsbelastung durchgeführt wird. Diese Normalbetriebsphase mit vorgegebener Rotordrehzahl kann zweckmäßigerweise so lange beibehalten werden, wie der erfasste Schlupf im Zugmittelgetriebe die zweite Schlupfschwelle nicht übersteigt und das vom Drehstrom-Elektromotor erzeugte Drehmoment eine vorgegebene Drehmomentschwelle nicht überschreitet. Zweckmäßigerweise kann diese vorgegebene Drehmomentschwelle durch den spezifischen Aufbau des Drehstrom-Elektromotors vorgegeben, insbesondere ein Motorkennwert sein.

Um beim Auftreten eines Zugmittelgetriebe-Schlupfes größer als die zweite Schlupfschwelle die Zeitdauer der Schlupfbetriebsphase möglichst gering zu halten und ein zeitlich optimiertes Ansprechen der Steuerung bzw. Regelung auf das Auftreten des übermäßigen Zugmittelgetriebe-Schlupfes bereitzustellen, kann vorgesehen sein, dass die Absenkung des vom Drehstrom-Elektromotor abgegebenen Drehmoments um ein Maß durchgeführt wird, dass in Abhängigkeit des erfassten Ist-Wertes des Zugmittelgetriebe-Schlupfes ermittelt, insbesondere berechnet wird. Besonders zweckmäßig kann es sein, wenn dieses Maß der Absenkung des vom Drehstrom-Elektromotor erzeugten Drehmoments als vorgegebene Funktion von dem erfassten Ist-Wert des Zugmittelgetriebe-Schlupfes ermittelt wird. Vorteilhafterweise kann diese Funktion in einer Steuereinrichtung abgelegt und an die spezifischen Eigenschaften des Elektromotors und/oder des Zugmittelgetriebes angepasst sein. Zweckmäßigerweise kann die Funktion durch Abspeichern einer Polynomentwicklungsdarstellung oder von Stützstellen abgelegt sein, wobei bei letzterem Zwischenwerte interpoliert werden.

Nachdem sich innerhalb der Schlupfbetriebsphase ein stabiler Schlupfwert des Zugmittelgetriebes einstellt, welcher ≤ der dritten bzw. der zweiten Schlupfmittelschwelle ist, kann vorgesehen sein, das Drehmoment des Drehstrom-Elektromotors durch entsprechendes Ansteuern des Frequenzumrichters wieder zu erhöhen, bis die vorgegebene Rotordrehzahl wieder erreicht und der Normalbetrieb wieder aufgenommen werden kann. Zweckmäßigerweise kann dabei auch vorgesehen sein, dass das vom Elektromotor abgegebene Drehmoment dann auf einen vorgegebenen maximalen Wert eingestellt wird, welcher beispielsweise dem Nenndrehmoment des Motors entsprechen kann. Soweit sich dabei wiederum ein erhöhter, die zweite Schwelle übersteigender Zugmittelgetriebe-Schlupf einstellt, kann auch vorgesehen sein, zurück in die beschriebene Schlupfbetriebsphase zu schalten und für die nächste Beschleunigungsphase ein vermindertes maximales Drehmoment abzuspeichern, um zu vermeiden, dass nach Beendigung einer Schlupfbetriebsphase aufgrund der Einstellung eines zu großen Drehmomentes durch entsprechende Ansteuerung des Frequenzumrichters sich erneut ein zu großer Zugmittelgetriebe-Schlupf einstellt. Insofern kann sich die Steuerung bzw. Regelung in dieser Ausführungsform des erfindungsgemäßen Verfahrens an geänderte Betriebsbedingungen, beispielsweise verursacht durch einen Verschleiß des Treibriemens oder eine geänderte Riemenspannung, automatisch anpassen.

In solchen Betriebsphasen, bei welchen der Zugmittelgetriebe-Schlupf kleiner als die zweite Schlupfschwelle ist, kann die Belastung des Zugmittelgetriebes aufgrund des vom Drehstrom-Elektromotor bereitgestellten Drehmoments beibehalten werden. Es sind jedoch Betriebssituationen möglich, bei welchen das Zugmittelgetriebe nicht überlastet, jedoch das vom Drehstrom-Elektromotor erzeugte Drehmoment eine vorgegebene obere Drehmomentschwelle, beispielsweise das Nenndrehmoment erreicht. Um in solchen Betriebssituationen einen an die gegebenen Umstände optimalen Zerkleinerungsbetrieb aufrecht zu erhalten, kann vorgesehen sein, an die Normalbetriebsphase mit vorgegebener Rotordrehzahl eine Grenzlastbetriebsphase anzuschließen, bei welcher durch entsprechendes Ansteuern des Frequenzumrichters das vom Drehstrom-Elektromotor erzeugte Drehmoment auf der vorgegebenen Drehmomentschwelle oder -grenze konstant gehalten wird, wodurch die aktuelle Rotordrehzahl relativ zur vorgegebenen Rotordrehzahl absinkt, da diese vorgegebene Drehmomentschwelle nicht ausreicht, um die vorgegebene Rotordrehzahl beizubehalten.

Um die vorgegebene Drehzahl und damit die Normalbetriebsphase im Betrieb wieder zu erreichen, kann bei dem erfindungsgemäßen Verfahren zweckmäßigerweise vorgesehen sein, in der Grenzlastbetriebsphase das Drehmoment des Drehstrom-Elektromotors auf der vorgegebenen Drehmomentschwelle durch entsprechendes Ansteuern des Frequenzumrichters so lange konstant zu halten, bis die vorgegebene Zerkleinerungsrotordrehzahl wieder erreicht wird, d.h. der Zerkleinerungsrotor wieder auf die vorgegebene Rotordrehzahl beschleunigt wurde.

Das erfindungsgemäße Verfahren ist nicht nur auf solche Betriebsarten beschränkt, bei welchen die vorgegebene Rotordrehzahl für den gesamten Betriebsverlauf konstant ist. Stattdessen kann sehr wohl vorgesehen sein, dass diese vorgegebene Rotordrehzahl sich nach einer vorgegebenen Funktion zeitlich ändert, beispielsweise im Falle einer Zerkleinerungsvorrichtung, bei welcher der geforderte Durchsatz des zerkleinerten Guts einer vorgegebenen zeitlichen Funktion folgt. Dies kann beispielsweise bei einer größeren Anlage der Fall sein, wie einem Kraftwerk, bei welchem der Durchsatz und damit die Drehzahl einer Kohlezerkleinerungsvorrichtung zur Speisung eines Kraftwerksofens auf den zeitabhängigen Bedarf an zu erzeugendem Verbrauchsstrom abgestimmt sind.

Um das Antwortverhalten der Zerkleinerungsvorrichtung beim Auftreten eines erhöhten Zugmittelgetriebe-Schlupfes weiter zu verbessern, kann zweckmäßigerweise vorgesehen sein, neben dem Zugmittelgetriebe-Schlupf als Führungs- bzw. Steuergröße auch den vom Frequenzumrichter bereitgestellte Speisestrom als Führungsgröße bzw. Steuergröße zu verwenden.

Besonders zweckmäßig kann es sein, dass Zugmittelgetriebe für die Umsetzung des erfindungsgemäßen Verfahrens zum Betrieb einer Zerkleinerungsvorrichtung nicht überzudimensionieren, sondern so auszulegen, dass ein Gleitschlupf entsprechend der zweiten Schwelle bei einer Zerkleinerungsbelastung auftritt, welche zweckmäßigerweise etwa 170%, besonders bevorzugt etwa 200%, äußerst bevorzugt etwa 230% des Nenndrehmoments entspricht. Mit dieser Maßnahme kann einerseits besonders sicher ein kontinuierlicher Zerkleinerungsbetrieb durchgeführt und zum anderen ein Störbetrieb, insbesondere aufgrund von unzerkleinerbaren Störstoffen im Zerkleinerungsgut erkannt werden und soweit möglich die notwendigen Steuerungsmaßnahmen ergriffen werden, um den Zerkleinerungsbetrieb in fast allen Betriebssituationen aufrecht zu erhalten. Das erfindungsgemäße Verfahren kann in Bezug auf die Dimensionierung der Komponenten und der Vorgaben der angegebenen Betriebsgrenzwerten in einer besonderen Ausführungsform so eingerichtet sein, der Zerkleinerungsbetrieb tatsächlich nur unterbrochen werden muss, wenn der Schlupf die erste Schwelle überschreitet gleichbedeutet mit der Erfassung eines blockierenden Störstoffs.

Um die Steuerung bzw. Regelung beim erfindungsgemäßen Verfahren zum Betrieb einer Zerkleinerungsvorrichtung zeitoptimiert durchführen zu können, kann zweckmäßigerweise vorgesehen sein, dass Steuersignale, welche die Drehzahl des Zerkleinerungsrotors bzw. die Drehzahl einer ausgangsseitigen Riemenscheibe des Zugmittelgetriebes angeben, von einer Steuereinrichtung empfangen und zur Ermittlung des Schlupfes im Zugmittelgetriebe verarbeitet werden, wobei die Steuereinrichtung den Frequenzumformer steuert und insbesondere innerhalb des Gehäuses dessen Frequenzumformers vorgesehen ist. Zweckmäßigerweise wird das erfindungsgemäße Verfahren durch die Steuerung des Frequenzumrichters durchgeführt. Die mit dieser Maßnahme verbundenen kurzen Signallaufzeiten sowie eine zeitoptimierte Verarbeitung innerhalb der Steuereinrichtung ermöglichen ein extrem schnelles Antwortverhalten der Steuer- bzw. Regelstrecke im ms- oder gar µs-Bereich. Dabei kann diese Steuereinrichtung zweckmäßigerweise eine Speichereinrichtung zum Abspeichern vorgegebener Betriebsparameter wie Schlupfwertschwellen und zumindest einer Drehmomentschwelle aufweisen, auf Grundlage dieser Parameter das erfindungsgemäße Verfahren durchgeführt wird.

Zweckmäßigerweise kann das Mittel zum Ermitteln der Drehposition des Rotors des Elektromotors ein Sensor, insbesondere ein Drehwertgeber sein. Prinzipiell sind alle herkömmlichen Sensoren zur Erfassung einer Drehposition verwendbar, insbesondere Inkrementalgeber, welche beispielsweise fotoelektrisch, magnetisch oder mittels Schleifkontakten arbeiten. Für das beschriebene Verfahren sollte der Sensor jedoch zweckmäßigerweise besonders hochauflösend sein und ein extrem kurzes Antwortverhalten besitzen. Grundsätzlich kann ein ähnlicher oder gleicher Sensor zur Ermittlung der Drehposition bzw. der Drehgeschwindigkeit des Zerkleinerungsrotors verwendet werden.

Besonders vorteilhaft ist es, wenn die Drehposition des Rotors des Elektromotors bzw. dessen Drehgeschwindigkeit ohne äußere Sensoren, insbesondere ohne einen Drehwertgeber ermittelt wird. Zweckmäßigerweise kann dabei die Ist-Drehposition oder Drehzahl des Rotors des Elektromotors unter Berücksichtigung zumindest von vorbestimmten Motorparametern und/oder Motorbetriebsparametern ermittelt, insbesondere berechnet werden. Hierbei können die genannten vorbestimmten Motorparameter als individuelle Parametersatz für den jeweiligen Elektromotor aufgenommen in der Steuereinrichtung abgelegt werden, sodass sie beim Betrieb für die Ermittlung der momentanen Drehposition bzw. Drehgeschwindigkeit des Rotors des Elektromotors zur Verfügung stehen. Motorbetriebsparameter bezeichnen Ist-Parameterwerte während des Betriebs des Elektromotors wie Phasenspannungen, aus denen sich zusammen mit dem individuellen Motorparametersatz die jeweilige Ist-Drehlage bzw. Drehzahl des Rotors des Elektromotors bestimmen lässt, sodass das Vorsehen eines externen Drehgebersensors oder eines anders aufgebauten Sensors für den Elektromotor entfallen kann. Insbesondere für einer zeitoptimierten Steuerung des erfindungsgemäßen Verfahrens bietet diese Vorgehensweise Vorteile.

Zweckmäßigerweise kann in dieser Ausführung in der Steuereinrichtung auf der Grundlage von Ist-Parametern des Drehstrom-Elektromotors und den von der Drehzahl des Zerkleinerungsrotors abhängigen Signalen der Schlupf im Zugmittelgetriebe ermittelt, insbesondere berechnet werden und steht damit für die erfindungsgemäße Steuerung bzw. Regelung zur Verfügung. Diese Sensorsignale werden zweckmäßigerweise von einer Sensoreinrichtung zum Ermitteln der Drehposition einer Abtriebswelle des Zugmittelgetriebes bzw. der Drehposition des Zerkleinerungsrotors an die Steuereinrichtung übermittelt.

Die Erfindung wird ferner gelöst durch eine Zerkleinerungsvorrichtung mit einer Antriebseinrichtung, die zumindest einen Drehstrom-Elektromotor umfasst und die über ein kraftschlüssiges Zugmittelgetriebe einen Zerkleinerungsrotor antreibt, wobei die Zerkleinerungsvorrichtung eingerichtet ist, ein obenstehend beschriebenes erfindungsgemäßes Verfahren auszuführen. Das erfindungsgemäße Verfahren ist beispielsweise ausführbar mit einer Zerkleinerungsvorrichtung, welche einen sechs- oder achtpoligen Drehstrom-Asynchronmotor umfasst, dessen Ständerspulenwicklungen durch einen gesteuerten Frequenzumformer gespeist wird. Die erfindungsgemäße Zerkleinerungsvorrichtung kann einen Zerkleinerungsrotor aufweisen, der über ein Riemengetriebe angetrieben wird, wobei das Riemengetriebe in der einfachsten Ausführungsform eine vom Elektromotor in der Regel starr angetriebene eingangsseitige Riemenscheibe und eine ausgangsseitige Riemenscheibe aufweist, wobei letztere in der Regel starr mit dem Zerkleinerungsrotor verbunden und beide Riemenscheiben mittels eines kraftschlüssigen Treibriemens bewegungsgekoppelt sind.

Der Treibriemen kann beispielsweise als Flach- oder Keilriemen bzw. als Verbundkeilriemen ausgebildet sein. Das Riemengetriebe kann eine Untersetzung von etwa 1:4 aufweisen, sodass sich bei einer Speisefrequenz im Bereich von 50 Hz durch den Frequenzumrichter eine Zerkleinerungsrotordrehzahl im Bereich von ca. 100 - 400 U/min., insbesondere 150 - 300 U/min. ergibt.

Die Erfindung wird im Folgenden durch das Beschreiben einiger Ausführungsformen unter Bezugnahme auf die beiliegenden Zeichnungen erläutert, wobei
- Figur 1: den Aufbau einer erfindungsgemäß gestalteten Zerkleinerungsvorrichtung (1) zur Durchführung des erfindungsgemäßen Betriebsverfahrens in einer Prinzipskizze
- Figuren 2a, b: eine ähnlich wie die in Figur 1 aufgebaute Zerkleinerungsvorrichtung (1) in einer perspektivischen, realen Ansicht bzw. einer Aufsicht, und
- Figur 3: Zeitverlaufsdiagramme von verschiedenen Betriebsparametern über unterschiedliche Betriebssituationen
zeigt.

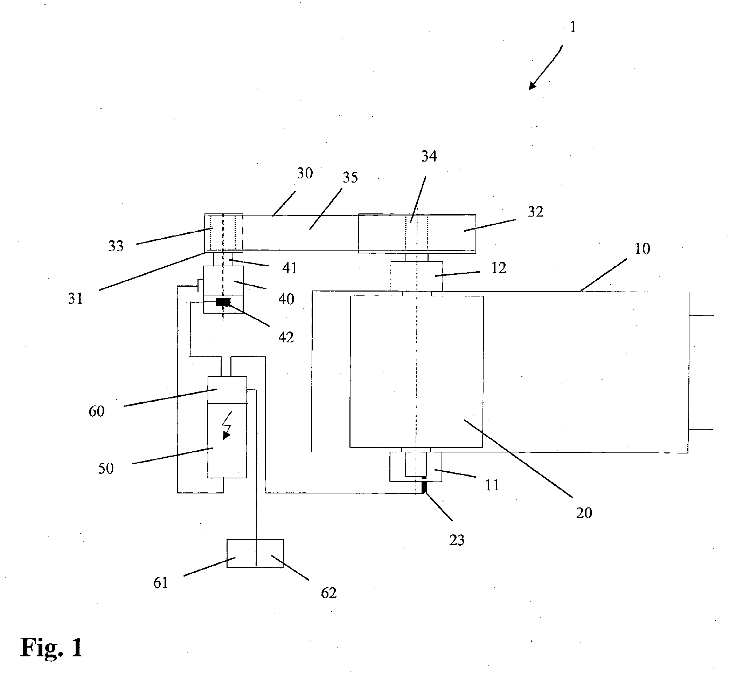

Figur 1 zeigt eine erfindungsgemäß ausgebildete Zerkleinerungsvorrichtung in einer Prinzipskizze. Diese umfasst ein Gehäuse 10, das über seitlich angeordnete Lager 11, 12 einen Zerkleinerungsrotor 20 trägt. Dieser Zerkleinerungsrotor 20 weist eine Mehrzahl von an seinem Umfang angeordnete Zerkleinerungswerkzeuge auf, welche in der Darstellung nicht angegeben sind. In der beschriebenen Ausführungsform geht die Welle des Zerkleinerungsrotors 20 in die Abtriebswelle 34 eines Riemengetriebes 30 über. Dieses Riemengetriebe setzt sich in der beschriebenen Ausführungsform aus zwei Riemenscheiben 31, 32 zusammen, welche über einen Flachriemen 35 gekoppelt sind. Dabei ist die ausgangsseitige Riemenscheibe 32 starr mit der Riemengetriebeabtriebswelle 34 bzw. der Rotorwelle des Zerkleinerungsrotors 20 und die eingangsseitige Riemenscheibe 31 starr mit der Riemengetriebe-Antriebswelle 33 verbunden, welche wiederum in der beschriebenen Ausführungsform starr mit dem Rotor 41 des Drehstrom-Asynchronmotors 40 verbunden ist. Der Motor 40 treibt insofern über das beschriebene Riemengetriebe 30 den Zerkleinerungsrotor 20 zum Zerkleinern von Zerkleinerungsgut an. Der Elektromotor ist in der beschriebenen Ausführungsform als achtpoliger Drehstrom-Asynchronmotor mit einer Leistung von 100 KW ausgebildet, sodass sich bei einer Speisung mit 50 Hz eine Motornenndrehzahl von 750 U/min. ergibt. Das Riemengetriebe selbst weist eine Untersetzung von 1:4 auf, was bei einer Speisung von 50 Hz zu einer Rotordrehzahl von etwa 190 U/min. führt. Zur Umsetzung des erfindungsgemäßen Betriebsverfahrens erfolgt die Speisung des Drehstrom-Asynchronmotors 40 über einen Frequenzumrichter 50, welcher über eine zugeordnete Steuereinrichtung 60 gesteuert wird und sich im Gehäuse des Frequenzumrichters angeordnet ist. Der Frequenzumrichter ist insbesondere zur Abgabe einer einstell- bzw. regelbaren Drehstrom-Speisespannung mit variierbarer Frequenz ausgebildet. Die Drehstrom-Speisung des Frequenzumrichters über ein öffentliches Netz ist der Einfachheit halber nicht dargestellt.

In der beschriebenen Ausführungsform wird die Zerkleinerungsvorrichtung je nach Zerkleinerungsgut bei Drehzahlen von typischerweise ca. 150 - 300 U/min. betrieben. An der Welle des Zerkleinerungsrotors 20 ist ein hochauflösender Drehwertgeber 23 angebracht. In der in Figur 1 angegebenen Ausführungsform ist darüber hinaus ein hochauflösender Drehwertgeber 42 am Rotor 41 des Elektromotors 40 angebracht. Beide Sensoren sind ausgangsseitig mit der Steuereinrichtung 60 des Frequenzumrichters 50 verbunden zur Ermittlung des Schlupfes im Riemengetriebe 30 durch Vergleich der Drehzahl von Motorwelle 41 und Zerkleinerungsrotor 20 entsprechend dem Drehzahlunterschied zwischen eingangsseitiger Riemenscheibe 31 und ausgangsseitiger Riemenscheibe 32 des Riemengetriebes 30.

Figur 1 zeigt ferner noch eine Eingabeeinrichtung 62 in Form einer Tastatur sowie eine Ausgabeeinrichtung 61 in Form eines Displays zur Eingabe von spezifischen Betriebsparametern, um den Betrieb der Zerkleinerungsvorrichtung an das jeweilige Zerkleinerungsgut, insbesondere durch Vorgabe von bestimmten Betriebsparametern anzupassen.

In einer weiteren Ausführungsform der erfindungsgemäßen Zerkleinerungsvorrichtung kann auch vorgesehen sein, die Drehposition bzw. die Drehgeschwindigkeit des Rotors des Elektromotors ohne einen äußeren Sensor zu ermitteln. Beispielsweise kann die Ist-Drehposition des Rotors des Elektromotors von der Steuereinrichtung unter Berücksichtigung von vorbestimmten Motorparametern und/oder Motorbetriebsparametern ermittelt werden. Hierbei können die genannten vorbestimmten Motorparameter als individueller Parametersatz für den jeweiligen Elektromotor aufgenommen in der Steuereinrichtung 60 abgelegt werden, sodass sie beim Betrieb der erfindungsgemäßen Zerkleinerungsvorrichtung für die Ermittlung der momentanen Drehposition bzw. Drehgeschwindigkeit des Rotors des Elektromotors zur Verfügung stehen. Motorbetriebsparameter bezeichnen Ist-Parameterwerte während des Betriebs des Elektromotors die Phasenspannungen, aus denen sich zusammen mit dem individuellen Motorparametersatz die jeweilige Ist-Drehlage bzw. Drehgeschwindigkeit des Rotors des Elektromotors bestimmen lässt. Insofern wird bei dieser Ausführungsform allein ein hochauflösender Drehwertgeber 23 zur Ermittlung der Drehposition bzw. der Drehgeschwindigkeit des Zerkleinerungsrotors verwendet. Die Drehzahldifferenz bzw. der Schlupf im Riemengetriebe 30 wird dann auf der Basis der Signale dieses Drehwertgebers und der Motorbetriebsparameter ermittelt.

Aufgrund der beschriebenen Gestaltung des Riemengetriebes 30 kann dieses Schlupf aufweisen, d.h. die Riemenscheiben 31, 32 können je nach Betriebsbedingungen relativ zum Riemen 30 rutschen, sodass beide Riemenscheiben keinen festen Drehbezug zueinander aufweisen. Das Auftreten eines solchen Gleitschlupfes hängt insbesondere von der Dimensionierung des Riemengetriebes und von den jeweiligen Belastungen, insbesondere Stoßbelastungen innerhalb des Zerkleinerungsbetriebes ab. Für die Durchführung des erfindungsgemäßen Verfahrens zum Betrieb einer Zerkleinerungsvorrichtung hat es sich als sehr vorteilhaft herausgestellt, das Getriebe so auszulegen, dass es bei üblichen Betriebsbedingungen wie betriebswarmen Riemen und vorgeschriebener Riemenspannung zum gleitschlupffreien Übertragen von etwa dem 1,8 bis 2,5-fachen, besonders vorteilhaft, etwa dem zweifachen des Nenndrehmoments des Drehstrom-Asynchronmotors 40 ausgelegt ist. Bei einer solchen Auslegung des Riemengetriebes werden sich im Zerkleinerungsbetrieb immer wieder Situationen mit erhöhtem Gleitschlupf einstellen, sodass sich das erfindungsgemäße Verfahren zum Betrieb einer Zerkleinerungsvorrichtung, besonders wirkungsvoll und effektiv umsetzen lässt. Dieses Verfahren ermöglicht einen kontinuierlichen Zerkleinerungsbetrieb, sodass ansonsten bei herkömmlichen Betriebsverfahren mit üblichen Zerkleinerungsvorrichtungen notwendige Maßnahmen wie das Reversieren des Antriebs oder das Vermindern der Zuführung von Zerkleinerungsgut häufig vermieden werden können.

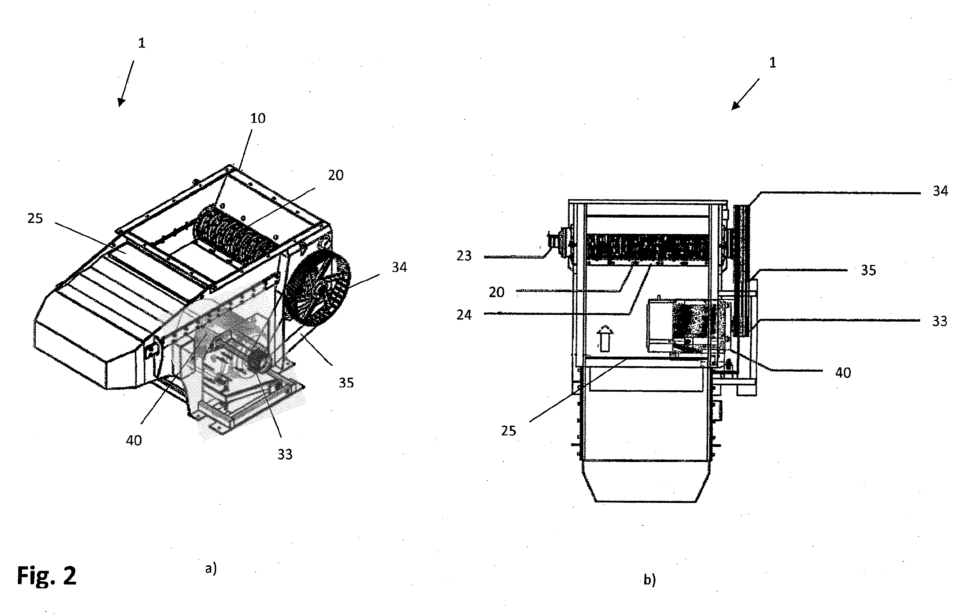

Die Figuren 2a, b zeigen Abbildungen einer realen Gestaltung einer erfindungsgemäß ausgebildeten Zerkleinerungsvorrichtung zur Umsetzung des erfindungsgemäßen Betriebsverfahrens. Dabei sind im Vergleich zur Prinzipskizze von Figur 1 gleiche Bauteile mit den gleichen Bezugszeichen versehen. Zum Zuführen des Zerkleinerungsgutes weist die Vorrichtung gemäß den Figuren 2a, b einen horizontal zum Zerkleinerungsrotor 20 bewegbaren Schieber 25 auf, ferner ist ein Gegenmesser 24 erkennbar, welches mit Zerkleinerungswerkzeugen, die umfänglich am Zerkleinerungsrotor 20 angebracht sind, zum Zerkleinern zusammenwirken.

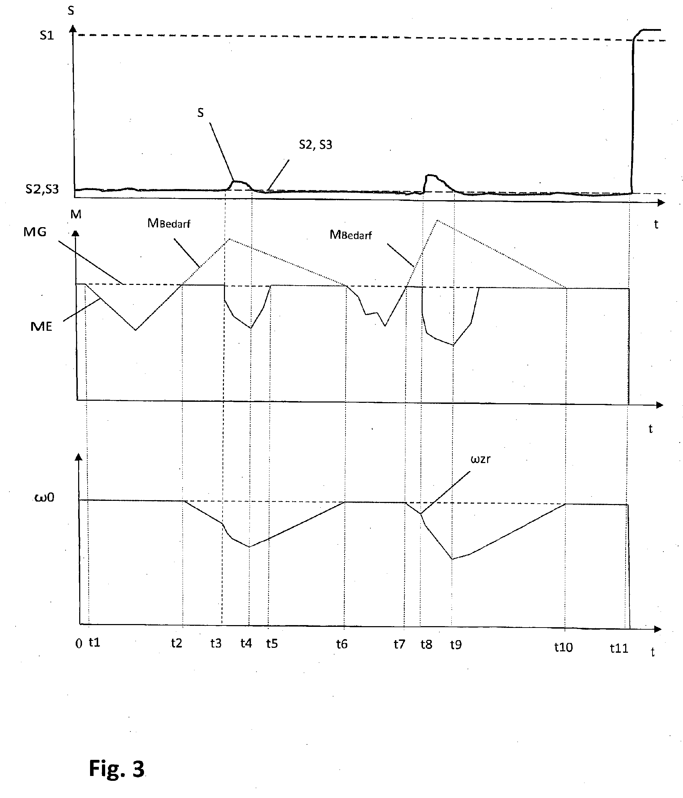

Das erfindungsgemäße Verfahren zum Betrieb einer Zerkleinerungsvorrichtung wird im Folgenden mit Bezug auf Figur 3 beschrieben werden, welche für eine bestimmte Betriebszeit den zeitlichen Verlauf bestimmter Betriebsparameter zeigt. Bei der hier beschriebenen Ausführungsform des erfindungsgemäßen Verfahrens sind typische Steuerzeiten bzw. Regelzeiten sehr kurz, im Bereich von wenigen Millisekunden oder kürzer gehalten, sodass mit einer extrem kurzen Reaktionszeit auf das üblicherweise plötzlich auftretende Schlupfereignis im Riemengetriebe reagiert werden kann. Zu diesem Zweck sind Signallaufzeiten, insbesondere von den Signalgebern 23, 42 zur Steuereinrichtung 60 minimiert, ferner ist diese zur schnellen Weiterverarbeitung der Information und zur schnellen Steuerung des Frequenzumrichters 50 eingerichtet. In dieser Hinsicht sind herkömmlicherweise verwendete Schlupfwächter zu langsam, um einen erfindungsgemäßen, in der Regel kontinuierlichen Zerkleinerungsbetrieb aufrechtzuerhalten.

Darüber hinaus sind in der beschriebenen Ausführungsform die Komponenten der erfindungsgemäßen Zerkleinerungsvorrichtung, insbesondere elektrische Komponenten der Steuer- bzw. Regelstrecke so ausgewählt, dass die untenstehend beschriebene Betriebssituationen schnell erfasst, ausgewertet und innerhalb eines Antwortverhaltens von etwa 1 - 2 ms oder kürzer zur Änderung der Speiseparameter wie Strom bzw. Spannung angepasst werden können, wodurch fast immer ein Stillstand des Zerkleinerungsrotors 20 vermieden werden kann. Ein bei herkömmlichen Verkleinerungsvorrichtungen häufig auftretender Stillstand des Zerkleinerungsrotors ist problembehaftet, da ein Wiederanlaufen unter Last, hervorgerufen durch das sich in der Vorrichtung befindliche Zerkleinerungsgut, oft verhindert wird.

Vor dem Betriebsstart werden über die Eingabeeinrichtung 62 in Abhängigkeit des zu zerkleinernden Guts Betriebsparameter wie die gewünschte Soll-Drehzahl ω0 des Zerkleinerungsrotors, eine erste Schlupfwertschwelle S1 des Zugmittelgetriebes zum Erkennen von nicht zerkleinerbaren Störstoffen, eine zweite Schlupfwertschwelle S2, welche für den Betrieb der Zerkleinerungsvorrichtung als zulässige Abweichung der Differenzdrehzahl bzw. des Schlupfes angesehen wird, eine dritte Schlupfwertschwelle S3, welche für den Betrieb der Zerkleinerungsvorrichtung in der Schlupfbetriebsphase als zulässige Abweichung der Differenzdrehzahl bzw. des Schlupfes angesehen wird sowie eine Motordrehmomentgrenze MG, welche das vom Motor maximal abgegebene Drehmoment angibt. Dies kann insbesondere das Motornenndrehmoment sein. Diese Werte werden in der Steuereinrichtung 60 des Frequenzumrichters 50 abgelegt. In der beschriebenen Ausführungsform sind die zweite und die dritte Schlupfwertschwelle S2, S3 auf identische Werte festgelegt.

Figur 3 zeigt den Zeitverlauf des Zugmittelgetriebe-Schlupfes S, des Motordrehmoments M und der aktuellen Drehzahl ωzr des Zerkleinerungsrotors. In der beschriebenen Ausführungsform wird der Schlupf S durch Bilden der Drehzahldifferenz ωE - ωzr geteilt durch ωE gebildet, wobei ωE die Drehgeschwindigkeit des Elektromotors und ωzr die Drehzahl des Zerkleinerungsrotors sind, entsprechend den Drehgeschwindigkeiten der eingangsseitigen bzw. ausgangsseitigen Riemenscheibe des Riemengetriebes 30.

Wie aus dem oberen Graph der Figur 3 hervorgeht, verbleibt der ermittelten Schlupf S innerhalb des Zeitintervalls von t = 0 bis t = t2 unterhalb der zweiten Schlupfschwelle S2, sodass die Steuerung eine Normalbetriebsphase aufrechterhalten kann, bei welcher die vorgegebene Rotordrehzahl ω0 beibehalten bleibt, was sich durch den horizontalen Verlauf der Drehfrequenz ωzr des Zerkleinerungsrotors in der dritten Kurve wiederspiegelt. Im mittleren Graphen ist zunächst gestrichelt die vorgewählte Drehmomentgrenze MG angegeben, welche sich als horizontale Linie darstellt. Wie aus dem Verlauf des vom Motor abgegebenen Ist-Drehmoments ME ersichtlich, ist die Zerkleinerungsbelastung des Motors innerhalb des Zeitintervalls t1 bis t2 niedriger als die vorgegebene Motordrehmomentgrenze MG, sodass innerhalb dieses Zeitraums das Motormoment ME abfällt und belastungsabhängig nachfolgend wieder ansteigt, bis es zum Zeitpunkt t2 wieder die vorgegebene Motordrehmomentgrenze MG erreicht. Der Zeitbereich zwischen t1 und t2 kann je nach Betriebssituation im Sekunden- oder Minutenbereich liegen.

Nach t2 müsste zur Beibehaltung der vorgewählten Drehzahl ω0 des Zerkleinerungsrotors das Drehmoment weiter steigen, da die Belastung durch den Zerkleinerungsvorgang weiter zunimmt. Diese weitere, theoretische Zunahme des Drehmoments ist im Graphen gepunktet dargestellt und mit dem Bezugszeichen MBedarf versehen. Da maximal die Drehmomentgrenze MG abgegeben werden kann, fällt zwischen den Zeitpunkten t2 und t3 die Drehzahl des Zerkleinerungsrotors, siehe die untere Kurve von Figur 3. Auch der Zeitbereich zwischen t2 und t3 kann je nach Betriebssituation im Sekunden- oder Minutenbereich liegen.

Zum Zeitpunkt t3 erhöht sich der Schlupf S über die Schwelle S2 und verbleibt bis zum Zeitpunkt t4 über diesen Wert. Um das weitere Durchrutschen des Riemens im Riemengetriebe 30 zu verhindern, wird von der Steuereinrichtung 60 zur Absenkung des vom Elektromotor 40 abgegebenen Drehmoments in eine Schlupfbetriebsphase geschaltet, bei welcher der Zugmittelgetriebe-Schlupf in der vorgegebenen Ausführungsform auf die dritte Schlupfschwelle S3, in der beschriebenen Ausführungsform identisch mit der zweiten Schlupfwertschwelle S2, gesteuert, in einer weiteren Ausführungsform geregelt wird. Hierzu wird von der Steuereinrichtung 60 die Drehmomentgrenze ausgehend von der vorgegebenen Momentgrenze MG abgesenkt bis der Schlupf S sich wieder auf bzw. unterhalb der Schwelle S2 einpegelt. Dies ist zum Zeitpunkt t4 der Fall, sodass dann das Motordrehmoment ME wieder erhöht werden kann, im vorliegenden Fall bis zur vorgegebenen Momentgrenze MG zum Zeitpunkt t5. Die Dauer des Zeitintervalls zwischen t3 und t4 liegt aufgrund der sehr schnellen Steuer- bzw. Regelzeit im ms-Bereich, sodass trotz Auftretens des erhöhten Schlupfes unterhalb der Schwelle S1 häufig ein unterbrechungsfreier Zerkleinerungsbetrieb aufrecht erhalten werden kann ohne eine ansonsten üblichen Unterbrechung der Zerkleinerung zum Reversieren oder eine Verlangsamung der Zuführung des Zerkleinerungsgutes durchführen zu müssen.

Nach dem Abfallen des Schlupfes S wieder auf bzw. unterhalb die Schwelle S2 kann die Steuerung wieder in eine Betriebsphase schalten, bei welcher der Schlupf die Grenze S2 nicht überschreitet. Da der Riemen zum Zeitpunkt t4 wieder "gefangen" wurde, wird, wie erläutert, das Motordrehmoment ME wieder auf die voreingestellte Motormomentgrenze MG erhöht. Auch die Dauer des Zeitintervalls zwischen t4 und t5 kann im ms-Bereich liegen, ohne dass ein unzulässig hoher Schlupf im Riemengetriebe auftritt, der ein Abschalten des Motors zur Folge hätte.

Das nachfolgende Intervall bis zum Zeitpunkt t6 wird genutzt, um die Drehzahl des Zerkleinerungsrotors wieder auf die voreingestellte Drehzahl ω0 zu bringen. Hierzu wird das abgegebene Motormoment ME auf der vorgegebenen Drehmomentgrenze MG gehalten, wodurch der Zerkleinerungsrotor beschleunigt wird. Nach Erreichen der vorgegebenen Solldrehzahl ω0 ist zur Beibehaltung derselben ein vermindertes Motormoment ME notwendig, das insofern zwischen den Zeitpunkten t6 und t7 fällt und danach wieder ansteigt.

Wie erläutert, können die Zeitintervalle zwischen den Zeitpunkten t3 und t4, t4 und t5 bzw. t8 und t9 (s. unten) im Millisekundenbereich liegen. Während in diesen Zeitabschnitten Drehmomentabsenkungen tatsächlich im Bereich von 50% oder mehr liegen können, sind die im dritten Graph angegebenen Drehzahlabsenkungen innerhalb dieser kleinen Zeiträume her gering und im Graph zur Klarheit überzeichnet dargestellt.

In dem in Figur 3 beschriebenen Betriebsablauf tritt zum Zeitpunkt t8 wiederum ein erhöhter Schlupf S auf, welcher über der vorgegebenen Grenze S2 liegt. Erfindungsgemäß wird in der beschriebenen Ausführungsform innerhalb des Zeitintervalls t8 bis t9 wiederum in die Schlupfbetriebsphase geschaltet, in welcher eine Steuerung bzw. Regelung des Zugmittelgetriebe-Schlupfes unter Absenkung des vom Asynchronmotor 40 abgegebenen Motordrehmoments ME durchgeführt wird. Dabei ist in der Steuereinrichtung 60 ein funktionaler Zusammenhang über das Maß der Absenkung des vom Asynchronmotor erzeugten Drehmoments ME als Funktion von dem erfassten Ist-wert des Zugmittelgetriebe-Schlupfes S abgelegt, über welche die Drehmomentabsenkung von der Steuereinrichtung berechnet wird. Vorliegend wird eine stärkere Verminderung des Drehmoments durchgeführt, da ein zur Situation innerhalb des Zeitintervalls t3 bis t4 erhöhter Schlupf S festgestellt wurde.

Innerhalb der Phasen t3 - t4 bzw. t8 - t9, bei welchen ein Schlupf auftritt, der oberhalb der zweiten Schwelle S2 liegt, wird einerseits das Motordrehmoment heruntergesteuert bzw. geregelt, andererseits wird zu diesen Zeitabschnitten das Schwungmoment des Zerkleinerungsrotors für den aktuellen Zerkleinerungsprozess genutzt. Die gleichzeitig auftretende Drehzahlerniedrigung führt wie beschrieben zum "Einfangen" des Riemens, sodass danach die Schlupfbetriebsphase verlassen und das Motordrehmoment ME wieder erhöht werden kann, um wieder die vorgegebene Solldrehzahl des Zerkleinerungsrotors anzusteuern.

Nach dem Zeitpunkt t9 wird das Drehmoment wieder kontinuierlich erhöht und zur Beschleunigung des Zerkleinerungsrotors auf die vorgegebene Drehzahl ω0 genutzt, die zum Zeitpunkt t10 erreicht ist.

Zwischen den Zeitpunkten t10 und t11 kann in der Normalbetriebsphase die voreingestellte Drehzahl ω0 unter Aufbringen des maximalen Motordrehmoments MG beibehalten werden.

Zum Zeitpunkt t11 wird das plötzliche Auftreten eines Schlupfes S erfasst, welcher über der voreingegebenen Schlupfgrenze S1 zum Erkennen von unzerkleinerbaren Störstoffen, vorliegend etwa 50% liegt. Aufgrund der kurzen Reaktionszeit wird sofort das Motordrehmoment heruntergefahren, in entsprechender Weise fällt die Drehzahl des Zerkleinerungsrotors sehr schnell bis zum Stillstand ab.

Im Unterschied zu dem mit Bezug auf die Figur 3 skizzierten Betriebsabläufen kann auch vorgesehen sein, die Steuerung bzw. Regelung in einer Schlupfbetriebsphase so einzustellen, dass nach der Erniedrigung des Schlupfes S unter die Schwelle S2 das Motordrehmoment nicht in mehreren Schritten bzw. einer endlichen Steigung allmählich wieder auf die vorgegebene Motordrehmomentgrenze erhöht wird, sondern stattdessen nach Abfall des Schlupfes unter die besagte Grenze das vom Asynchronmotor abgegebene Drehmoment sprungartig wieder auf die vorgegebene Motordrehmomentgrenze zu erhöhen. Sollte sich in diesem Fall wieder ein erhöhter Schlupf über die Grenze S2 ergeben, würde das Motordrehmoment erneut abgesenkt werden.

### Bezugszeichenliste

- 1: Zerkleinerungsvorrichtung
- 10: Gehäuse
- 11, 12: Lager
- 20: Zerkleinerungsrotor
- 21: Zerkleinerungsmesser
- 23: Drehwertgeber
- 24: Gegenmesser
- 25: Schieber
- 30: Riemengetriebe
- 31: Eingangsseitige Riemenscheibe
- 32: Ausgangsseitige Riemenscheibe
- 33: Antriebswelle
- 34: Abtriebswelle
- 35: Riemen
- 40: Drehstrom-Asynchronmotor
- 41: Rotor des Drehstrom-Asynchronmotors
- 42: Drehwertgeber
- 50: Frequenzumrichter
- 60: Steuereinrichtung des Frequenzumrichters
- 61: Ausgabeeinrichtung
- 62: Eingabeeinrichtung
- MG: Motordrehmomentgrenze
- ME: Motordrehmoment
- M_Bedarf: Drehmoment zur Beibehaltung bzw. Einstellung der vorgegebenen Drehzahl ω0
- S: Schlupf
- S1: Erste Schlupfschwelle des Riemengetriebes zur Anzeige eines unzerkleinerbaren Störstoffes
- S2: zweite Schlupfschwelle des Riemengetriebes
- S3: dritte Schlupfschwelle des Riemengetriebes
- ti, i=1-11: Zeitpunkt
- ω0: Vorbestimmte Drehzahl des Zerkleinerungsrotors/Solldrehzahl
- ωzr: Ist- Drehdrehzahl des Zerkleinerungsrotors

## Patentansprüche

1. Verfahren zum Betrieb einer Zerkleinerungsvorrichtung (1), bei welchem von einer Antriebseinrichtung, die zumindest einen Drehstrom-Elektromotor (40) umfasst, ein Zerkleinerungsrotor (20) über ein kraftschlüssiges Zugmittelgetriebe, insbesondere ein Riemengetriebe(30), angetrieben wird, wobei der Elektromotor (40) von einem gesteuerten Frequenzumrichter (50) gespeist wird zum Betreiben des Zerkleinerungsrotors (20) mit vorgegebener Rotordrehzahl (ω0) in einer Normalbetriebsphase, und wobei ein Maß für den Zugmittelgetriebe-Schlupf (S) ermittelt und überwacht wird und bei Überschreiten einer ersten Schlupfwertschwelle (S1) des Zugmittelgetriebe-Schlupfes der Drehstrom-Elektromotor (40) zum Abschalten angesteuert wird, **dadurch gekennzeichnet**, d ass bei Überschreiten einer vorgegebenen zweiten Schwelle (S2) des Zugmittelgetriebe-Schlupfes, die unterhalb der ersten Schlupfschwelle (S1) liegt, der Frequenzumrichter (50) in einer Schlupfbetriebsphase zur Regelung bzw. Steuerung des Zugmittelgetriebe-Schlupfes (S) auf eine vorgegebene dritte Schlupfwertschwelle (S3) und zur Absenkung des vom Drehstrom-Elektromotor abgegebenen Drehmomentes (ME) angesteuert wird.

2. Verfahren nach Anspruch 1, **dadurch gekennzeichnet, dass** die dritte Zugmittelgetriebe-Schlupfschwelle (S3) ≤ der zweiten Zugmittelgetriebe-Schlupfschwelle (S2) ist.

3. Verfahren nach Anspruch 1 oder 2, **dadurch gekennzeichnet, dass** in der Schlupfbetriebsphase das vom Drehstrom-Elektromotor (40) erzeugten Drehmoment (ME) mittels Steuern des Frequenzumrichters (50) abgesenkt wird bis zum Erreichen oder Unterschreiten der dritten Schlupfwertschwelle (S3).

4. Verfahren nach Anspruch 3, **dadurch gekennzeichnet, dass** verzögerungsfrei nach Erreichen der dritten Schlupfwertschwelle (S3) der Frequenzumrichter (50) zum Speisen des Drehstrom-Elektromotors (40) angesteuert wird, derart, sodass dieser ein Drehmoment (ME) abgibt, dass gleich einer vorgegebenen oberen Drehmomentgrenze (MG) ist.

5. Verfahren nach Anspruch 1,2, 3 oder 4, **dadurch gekennzeichnet, dass** durch den Frequenzumrichter (50) in der Normalbetriebsphase mit vorgegebener Rotordrehzahl (ω0) mittels Speisen des Drehstrom-Elektromotors (40) eine Anpassung des vom Drehstrom-Elektromotor erzeugten Drehmoments (ME) an die aktuelle Zerkleinerungsbelastung durchgeführt wird.

6. Verfahren nach einem der Anspruch 1 bis 5, **dadurch gekennzeichnet, dass** die Normalbetriebsphase mit vorgegebener Rotordrehzahl (ω0) beibehalten wird, solange der erfasste Schlupf (S) im Zugmittelgetriebe die zweite vorgegebene Schlupfschwelle (S2) nicht übersteigt und das vom Drehstrom-Elektromotor erzeugte Drehmoment (ME) eine vorgegebene obere Drehmomentgrenze (MG) nicht überschreitet.

7. Verfahren nach einem der Ansprüche 1 bis 6, **dadurch gekennzeichnet, dass** die Absenkung des vom Drehstrom-Elektromotor (40) abgegebenen Drehmomentes (ME) um ein Maß durchgeführt wird, das in Abhängigkeit des erfassten Istwertes des Zugmittelgetriebe-Schlupfes (S) ermittelt, insbesondere berechnet wird.

8. Verfahren nach Anspruch 7, **dadurch gekennzeichnet, dass** das Maß der Absenkung des vom Drehstrom-Elektromotor (40) erzeugten Drehmoments als vorgegebene Funktion von dem erfassten Istwertes des Zugmittelgetriebe-Schlupfes (S) berechnet wird.

9. Verfahren nach einem der Ansprüche 1 bis 8, **dadurch gekennzeichnet, dass** nachdem sich in der Schlupfbetriebsphase ein stabiler Schlupfwert (S) des Zugmittelgetriebes eingestellt hat, der ≤ der dritten Schlupfmittelschwelle (S3) ist, das Drehmoment (ME) des Drehstrom-Elektromotors (40) durch entsprechendes Ansteuern des Frequenzumrichters (50) wieder erhöht wird bis die vorgegebene Zerkleinerungsrotordrehzahl (ω0) wieder erreicht und der Normalbetrieb wieder aufgenommen wird.

10. Verfahren nach einem der Ansprüche 1 bis 9, **dadurch gekennzeichnet, dass** sich an die Normalbetriebsphase mit vorgegebener Rotordrehzahl (ω0) eine Grenzlastbetriebsphase anschließt, wenn der erfasste Schlupf (S) im Zugmittelgetriebe die zweite vorgegebene Schlupfschwelle (S2) nicht übersteigt und das vom Drehstrom-Elektromotor (40) erzeugte Drehmoment (ME) eine vorgegebene Drehmomentschwelle (MG) erreicht, wobei in der Grenzlastbetriebsphase durch entsprechendes Ansteuern des Frequenzumrichters (50) das vom Drehstrom-Elektromotor (40) erzeugten Drehmoment (ME) auf der vorgegebenen Drehmomentschwelle (MG) konstant gehalten wird, wodurch die Rotordrehzahl (ωzr) relativ zur vorgegebenen Rotordrehzahl (ω0) absinkt.

11. Verfahren nach Anspruch 10, **dadurch gekennzeichnet, dass** in der Grenzlastbetriebsphase das Drehmoment (ME) des Drehstrom-Elektromotors auf der vorgegebenen Drehmomentschwelle (MG) durch entsprechendes Ansteuern des Frequenzumrichters (50) so lange konstant gehalten wird, bis die vorgegebene Rotordrehzahl (ω0) wieder erreicht und die Normalbetriebsphase wieder aufgenommen wird.

12. Verfahren nach einem der Ansprüche 1 bis 11, **dadurch gekennzeichnet, dass** eine Steuereinrichtung (60) zur Steuerung des Frequenzumformers (50), insbesondere angeordnet innerhalb des Gehäuses des Frequenzumformers (50) vorgesehen ist, wobei der Frequenzumformer (50) eine Speichereinrichtung zum Abspeichern vorgegebener Betriebsparameter wie Schlupfwertschwellen (S1, S2, S3) aufweist, und wobei Sensorsignale, welche von der Drehzahl des Zerkleinerungsrotors (20) abhängen, von der Steuereinrichtung (60) empfangen und zur Ermittlung des Schlupfes (S) im Zugmittelgetriebe verarbeitet werden.

13. Verfahren nach Anspruch 12, **dadurch gekennzeichnet, dass** in der Steuereinrichtung (60) auf der Grundlage von Ist-Betriebsparameters des Drehstrom-Elektromotors (40) und den von der Drehzahl des Zerkleinerungsrotors (40) abhängigen Signalen der Schlupf (S) im Zugmittelgetriebe ermittelt, insbesondere berechnet wird.

14. Verfahren nach einem der Ansprüche 12 oder 13, **dadurch gekennzeichnet, dass** die Sensorsignale von einer Sensoreinrichtung (23) zum Ermitteln der Drehposition einer Abtriebswelle des Zugmittelgetriebes bzw. der Drehposition des Zerkleinerungsrotors an die Steuereinrichtung (60) übermittelt werden.

15. Zerkleinerungsvorrichtung (1) mit einer Antriebseinrichtung, die zumindest einen Drehstrom-Elektromotor (40) umfasst, und die über ein kraftschlüssiges Zugmittelgetriebe wie ein Riemengetriebe (30) einen Zerkleinerungsrotor (20) antreibt, wobei die Zerkleinerungsvorrichtung ausgebildet ist, ein Verfahren nach einem der Ansprüche 1 bis 14 auszuführen.

## Claims

1. Method for operating of a crushing device (1), in which method a crushing rotor (20) is driven by a driving device that comprises at least an electric three-phase motor (40), via a non-positive traction drive, particularly a belt drive (30), wherein the electric motor (40) is energized by a controlled frequency converter (50) for operating the crushing rotor (20) at a predetermined rotor speed (ω0) in a normal operation phase, and wherein a measure for the traction drive slip (S) is determined and monitored and the electric three-phase motor (40) controlled for stopping when a first slip threshold value (S1) of the traction drive is exceeded, ***characterized* in that** when a predetermined second threshold value (S2) of the traction drive slip which is below the first slip threshold value (S1) is exceeded, the frequency converter (50) is controlled in a slip operation phase for the regulation or control of the traction drive slip (S) to a predetermined third slip threshold value (S3) and for reducing the torque (ME) output from the electric three-phase motor.

2. Method according to claim 1, ***characterized* in that** the third traction drive slip threshold value (S3) is ≤ the second traction drive slip threshold value (S2).

3. Method according to claim 1 or 2, ***characterized* in that** in the slip operation phase, the torque (ME) produced by the electric three-phase motor (40) is reduced by means of controlling the frequency converter (50) until it reaches or is below the third slip threshold value (S3).

4. Method according to claim 3, ***characterized* in that** after reaching the third slip threshold value (S3), the frequency converter (50) is controlled without delay for energizing the electric three-phase motor (40) in such a manner that the same outputs a torque which is equal to a predetermined upper torque limit (MG).

5. Method according to claim 1, 2, 3 or 4, ***characterized* in that** in the normal operation phase at a predetermined rotor speed (ω0), an adaption of the torque produced by the electric three-phase motor to the current crushing load is performed by the frequency converter (50) by means of energizing the electric three-phase motor (40).

6. Method according to one of the claims 1 to 5, ***characterized* in that** the normal operation phase at a predetermined rotor speed (ω0) is maintained as long as the detected slip (S) in the traction drive does not exceed the second predetermined slip threshold value (S2) and the torque (ME) produced by the electric three-phase motor does not exceed a predetermined upper torque limit (MG).

7. Method according to one of the claims 1 to 6, ***characterized* in that** the torque (ME) output from the electric three-phase motor (40) is decreased by a measure which is determined, particularly calculated, as a function of the detected actual value of the traction drive slip (S).

8. Method according to claim 7, ***characterized* in that** the measure by which the torque produced by the electric three-phase motor (40) is determined, is calculated as a predetermined function of the detected actual value of the traction drive slip (S).

9. Method according to one of the claims 1 to 8, ***characterized* in that** after a stable slip value (S) of the traction drive has been reached in the slip operation phase which is ≤ the third slip threshold value (S3), the torque (ME) of the electric three-phase motor (40) is again increased by correspondingly controlling the frequency converter (50) until the predetermined crushing rotor speed (ω0) is again reached and the normal operation is resumed.

10. Method according to one of the claims 1 to 9, ***characterized* in that** a maximum load operation phase follows the normal operation phase at a predetermined
rotor speed (ω0) when the detected slip (S) in the traction drive does not exceed the second predetermined slip threshold value (S2) and the torque (ME) produced by the electric three-phase motor (40) reaches a predetermined torque threshold value (MG), wherein the torque (ME) produced by the electric three-phase motor (40) is maintained constant at the predetermined torque threshold value (MG) in said maximum load operation phase by correspondingly controlling the frequency converter (50), whereby the rotor speed (ωzr) decreases relative to the predetermined rotor speed (ω0).

11. Method according to claim 10, ***characterized* in that** in the maximum load operation phase, the torque (ME) of the electric three-phase motor is maintained constant at the predetermined torque threshold value (MG) by correspondingly controlling the frequency converter (50) until the predetermined rotor speed (ω0) is again reached and the normal operation phase is resumed.

12. Method according to one of the claims 1 to 11, ***characterized* in that** a control device (60) for controlling the frequency transformer is provided and is arranged particularly inside the housing of the frequency transformer (50), wherein the frequency transformer (50) includes a storage device for storing predetermined operating parameters such as slip threshold values (S1, S2, S3), and wherein sensor signals which are dependent on the rotational speed of the crushing rotor (20) are received by the control device (60) and are processed for determining the slip (S) in the traction drive.

13. Method according to claim 12, ***characterized* in that** in the control device (60), the slip (S) in the traction drive is determined, particularly by computation, on the basis of actual operating parameters of the electric three-phase motor (40) and on the basis of the signals which are dependent on the rotational speed of the crushing rotor (40).

14. Method according to one of the claims 12 or 13, ***characterized* in that** the sensor signals are transmitted to the control device (60) from a sensor device (23) for detecting the rotational position of an output shaft of the traction drive or the rotational position of the crushing rotor.

15. Crushing device (1), including a driving device that comprises at least an electric three-phase motor (40) and drives a crushing rotor (20) via a non-positive traction drive such as belt drive (30), wherein said crushing device is constructed for carrying out a method as defined in any one of the claims 1 to 14.

## Revendications

1. Procédé pour opérer un dispositif de broyage (1), dans lequel procédé un rotor de broyage (20) est entrainé d'un dispositif d'entraînement comprenant au moins un moteur électrique triphasé (40), par un mécanisme à élément de traction non-positif, notamment une transmission à courroie (30), dans lequel le moteur électrique (40) est alimenté par un convertisseur de fréquence commandé (50), pour opérer le rotor de broyage (20) à un une vitesse de rotor prédéterminée (ω0) pendant une phase de fonctionnement normale, et dans lequel une mesure pour le glissement (S) du mécanisme à élément de traction est déterminée est surveillée et le moteur électrique triphasé (40) est commandé pour arrêter lorsqu'une première valeur de seuil de glissement (S1) du glissement du mécanisme à élément de traction est dépassée, ***caractérisé* en ce qu'**en cas une deuxième valeur de seuil prédéterminée de glissement (S2) du mécanisme à élément de traction est inférieure à la première valeur de seuil de glissement (S1), le convertisseur de fréquence (50), pendant une phase de fonctionnement en mode de glissement, est commandé pour la commande en boucle fermée ou en boucle ouverte du glissement du mécanisme à élément de traction de sorte que celui-ci est une troisième valeur de seuil de glissement (S3), et pour abaisser le couple transmis du moteur électrique triphasé (ME).

2. Procédé selon la revendication 1, ***caractérisé* en ce que** la troisième valeur de seuil de glissement (S3) du mécanisme à élément de traction est ≤ la deuxième valeur de seuil de glissement (S2) du mécanisme à élément de traction.

3. Procédé selon la revendication 1 ou 2, ***caractérisé* en ce que** pendant la phase de fonctionnement en mode de glissement, le couple (ME) produit du moteur électrique triphasé (40) est abaissé jusqu'à ce que la troisième valeur de seuil de glissement (S3) est atteint ou dépassée vers le bas.

4. Procédé selon la revendication 3, ***caractérisé* en ce qu'**après l'arrivée à la troisième valeur de seuil de glissement (S3), le convertisseur de fréquence (50) est commandé sans délai, pour alimenter le moteur électrique triphasé de sorte que celui-ci transmet un couple qui est égal à une valeur de limite supérieure prédéterminée de couple (MG).

5. Procédé selon la revendication 1, 2, 3 ou 4, ***caractérisé* en ce qu'**on procède à une adaptation du couple (ME) produit du moteur électrique triphasé à la charge de broyage actuelle par l'alimentation du moteur électrique triphasé (40) par le convertisseur de fréquence (50) dans la phase de fonctionnement normale à une vitesse de rotor prédéterminée (ω0).

6. Procédé selon l'une des revendications 1 à 5, ***caractérisé* en ce qu'**on maintient la phase d'opération normale à une vitesse de rotor prédéterminée (ω0) aussi longtemps que le glissement (S) détecté dans le mécanisme à élément de traction ne dépasse pas la deuxième valeur de seuil de glissement prédéterminée (S2) et le couple (ME) produit du moteur électrique triphasé ne dépasse pas une limite supérieure prédéterminée de couple (MG).

7. Procédé selon l'une des revendications 1 à 6, ***caractérisé* en ce que** le couple (ME) transmis du moteur électrique triphasé (40) est abaissé d'une mesure qui est déterminée et notamment calculée en fonction de la valeur effective détectée du glissement (S) du mécanisme à éléments de traction.

8. Procédé selon la revendication 7, ***caractérisé* en ce que** la mesure de l'abaissement du couple produit du moteur électrique triphasé (40) est calculé comme une fonction prédéterminée de la valeur actuelle détectée du glissement (S) du mécanisme à élément de traction.

9. Procédé selon l'une des revendications 1 à 8, ***caractérisé* en ce qu'**après la valeur de glissement (S) du mécanisme à élément de traction s'est stabilisée pendant la phase de fonctionnement en mode de glissement à une valeur de glissement qui est ≤ la troisième valeur de seuil de glissement (S3), le couple (ME) du moteur électrique triphasé (40) est augmentée de nouveau par une commande correspondante du convertisseur de fréquence (50) jusqu'à ce que la vitesse de rotor de broyage (ω0) prédéterminée est regagnée et le fonctionnement normale est remis.

10. Procédé selon l'une des revendications 1 à 9, ***caractérisé* en ce qu'**une phase de fonctionnement en mode de charge limite suit la phase de fonctionnement normale à une vitesse de rotor prédéterminée (ω0) si le glissement (S) détecté dans le mécanisme à élément de traction ne dépasse pas la deuxième valeur de seuil de glissement (S2) et si le couple (ME) produit du moteur électrique triphasé (40) arrive à une valeur de seuil de couple prédéterminée (MG), cependant le couple (ME) produit du moteur électrique triphasé (40) est maintenu constant à la valeur de seuil de couple prédéterminée (MG) dans la phase de fonctionnement en mode de charge limite, par une commande correspondante du convertisseur de fréquence (50) moyennant quoi la vitesse de rotor (ωzr) baisse par rapport à la vitesse de rotor prédéterminée (ω0).

11. Procédé selon la revendication 10, ***caractérisé* en ce que** dans la phase de fonctionnement en mode de charge limite, le couple (ME) du moteur électrique triphasé est maintenu à la valeur de seuil de couple prédéterminée (MG) par une commande correspondante du convertisseur de fréquence (50) jusqu'à ce que la vitesse de rotor prédéterminée (ω0) est regagnée et le fonctionnement normale est remis.

12. Procédé selon l'une des revendications 1 à 11, ***caractérisé* en ce qu'**un dispositif de commande (60) pour commander le convertisseur de fréquence (60) est disposé en particulier à l'intérieur d'une boîte du convertisseur de fréquence (50), cependant le convertisseur de fréquence (50) comporte un dispositif de mémoire pour stocker des paramètres de fonctionnement prédéterminés comme les valeurs de seuil de glissement (S1, S2, S3), et des signaux de capteur qui dépendent de la vitesse du rotor de broyage (20) sont reçus du dispositif de commande (60) est sont traités pour déterminer le glissement (S) dans le mécanisme à éléments de traction.

13. Procédé selon la revendication 12, ***caractérisé* en ce que** dans le dispositif de commande (60), le glissement (S) dans le mécanisme à élément de traction est déterminé et notamment calculé à base de paramètres de fonctionnement actuels du moteur électrique triphasé (40) et à base des signaux qui dépendent de la vitesse du rotor de broyage (40).

14. Procédé selon l'une des revendications 12 ou 13, ***caractérisé* en ce que** les signaux de capteur sont transmis au dispositif de commande (60) par un dispositif de capteur (23), pour détecter la position de rotation d'un arbre de sortie du mécanisme à élément de traction respectivement la position de rotation du rotor de broyage.

15. Dispositif de broyage (1) comprenant un dispositif d'entraînement qui comporte au moins un moteur électrique triphasé (40) et qui entraîne un rotor de broyage (20) par un mécanisme à élément de traction non-positif tel qu'une transmission à courroie (30), le dispositif de broyage étant configuré pour exécuter un procédé selon l'une des revendications 1 à 14.
